# EUROPÄISCHE PATENTSCHRIFT

(11) **EP 2 217 349 B1**
(45) Veröffentlichungstag und Bekanntmachung des Hinweises auf die Patenterteilung: **19.06.2013**
(21) Anmeldenummer: 08852695.9
(22) Anmeldetag: 04.11.2008
(51) Int. Cl.: B01D 35/147, B01D 35/153

(54) **FILTERVORRICHTUNG, INSBESONDERE RÜCKLAUF-SAUGFILTER**
FILTER DEVICE, PARTICULARLY REFLUX VACUUM FILTER
DISPOSITIF DE FILTRATION, EN PARTICULIER FILTRE DE RETOUR À ASPIRATION

(30) Priorität: 22.11.2007 DE 102007056362
(43) Veröffentlichungstag der Anmeldung: 18.08.2010
(60) Teilanmeldung: 11002866.9
(73) Patentinhaber: Hydac Filtertechnik GmbH, 66273 Sulzbach/Saar (DE)
(72) Erfinder: WILKENDORF, Werner, 66564 Ottweiler (DE); MARSCHALL, Stefan, 66578 Schiffweiler (DE)
(74) Vertreter: Bartels, Martin Erich Arthur
(86) Internationale Anmeldenummer: PCT/EP2008/009267
(87) Internationale Veröffentlichungsnummer: WO 2009/065489

(56) Entgegenhaltungen:
- WO-A-2005/063358
- WO-A-2007/011223
- DE-U1- 9 215 351
- GB-A- 913 414

## Beschreibung

Die Erfindung betrifft eine Filtervorrichtung, insbesondere Rücklauf-Saugfilter, mit mindestens einem Filtergehäuse, in dem mindestens ein eine Längsachse definierendes Filterelement aufnehmbar ist, und mit mindestens zwei Ventileinheiten, in Form mindestens eines Vorspannventils, wobei die genannten Ventileinrichtungen in zur Längsachse des jeweiligen Filterelementes konzentrischer Anordnung längs dieser Längsachse angeordnet sind. Bei einer derartigen Filtervorrichtung sind sämtliche Hauptkomponenten zur Längsachse des Filterelementes konzentrisch angeordnet sind. Die Gesamtvorrichtung kann dadurch einen schlanken, einheitlichen Baukörper bilden, beispielsweise in gestreckter, zylindrischer Form, ohne dass seitlich am Baukörper auskragende oder zur Längsachse versetzte Aggregate vorhanden wären, etwa in Form eines seitlich des zylindrischen Körpers angeordneten Bypassventils.

Eine von der Firma ARGO-HYTOS GmbH vertriebene Vorrichtung ist beispielsweise unter der Typbezeichnung E084 im Handel erhältlich. Rücklauf-Saugfilter kommen in Hydrauliksystemen in solchen Fällen zum Einsatz, wo im System sowohl ein offener Hydraulikkreislauf (z. B. eine Arbeitshydraulik) als auch ein geschlossenes hydrostatisches System vorhanden sind (z. B. ein Fahrantrieb). Rücklauf-Saugfilter können hierbei sowohl die Funktion des Rücklauffilters des offenen Kreises als auch die Funktion des Saugfilters des geschlossenen Kreises (Antriebs) übernehmen, vorausgesetzt, dass der Rücklaufstrom des offenen Hydrauliksystems nicht kleiner ist als der Volumenstrom der Speisepumpe für das hydrostatische System.

Eine Filtervorrichtung der eingangs genannten Art ist beispielsweise aus WO 2005/063358 A2 bekannt geworden. Die bekannte Filtervorrichtung weist ein Gehäuse mit einem Filterkopf, einem Körper und einem entfernbaren Deckel auf. Die entsprechende Filteranordnung umfaßt zwei Filtereinheiten, insbesondere eine Bypass-Filtereinheit, eine Endkappe und eine Dichtungsanordnung. Des Weiteren ist eine Bypass-Ventilanordnung vorgesehen. Am Filterkopf sind ein Eingang und ein Ausgang für zu filtrierendes bzw. filtriertes Fluid vorgesehen. Eine Saugfilteranordnung ist fluidführend mit einem Tankreservoir verbunden und derart ausgebildet, dass ein Fluidfluss vom Tankreservoir durch das Saugfiltermedium und in das Gehäuseinnere ermöglicht und Fluidfluss aus dem Gehäuseinneren durch das Saugfiltermedium und dann in das Tankreservoir verhindert wird. Ein entsprechend angeordnetes Rückschlagventil reguliert den Fluidstrom vom Gehäuse in das Tankreservoir.

Eine weitere gattungsgemäße Filtereinrichtung ist in WO 2007/011223 A2 offenbart. Die Filtervorrichtung zur Filtration eines Hydraulikfluids umfaßt ein Filtergehäuse zur Aufnahme eines Filterelements mit einem Eingang, einem Ausgang, einer ringförmigen Innenwand und Endkappen, von welchen eine den Ein- und/oder Ausgang für das Fluid aufweist. Weiter ist eine Überdruckentspannung und ein zweiter Ausgang zur Entspannung des Druckes in dem Filtergehäuse bei Überdruck an einer der ein- bzw. ausgangsseitigen Endkappe entgegengesetzten Endkappe vorgesehen. Die Überdruckentspannung umfaßt ein scheibenförmiges Ventil, welches einen Außenumfang entsprechend dem inneren Durchmesser der Innenwand des Filtergehäuses aufweist und konzentrisch zu dessen Längsachse angeordnet ist.

DE 92 15 351 U1 betrifft eine Filtervorrichtung zum Filtern von Fluiden mit einem Filterelement sowie mit einem Vorspann- und einem Überlastventil, das im Nebenschluß zu dem Filterelement und dem Vorspannventil angeordnet ist, mit einer ersten Anschlußstelle zum Zuführen des unfiltrierten Fluids von einer Verbraucherstelle, die als Teil eines Fluidkreises von einer Fluidpumpe versorgt ist, mit einer zweiten Anschlußstelle zwischen dem Filterelement und dem Vorspannventil zum Abführen des gefilterten Fluids, wobei mittels eines im Nebenschluß zum Filterelement angeordnetem differenzdruckgesteuerten Ventils in Abhängigkeit von dem Differenzdruck am Filterelement eine Verbindung zwischen der zweiten und einer dritten Anschlußstelle herstellbar ist, die an den Fluidkreis zwischen der Fluidpumpe und der Verbraucherstelle anschließbar ist.

Das Vorspann- und das Überlastventil ragen mit ihren bewegbaren Ventilteilen, die jeweils entgegen der Kraft eines Kraftspeichers in ihrer Schließstellung gehalten sind, von einem hülsenartigen Aufnahmeteil aufgenommen in das Innere des Filterelementes. Das hülsenartige Aufnahmeteil bildet eine unbewegbare Elementaufnahme zur Lagefixierung des Filterelements, die mittels der bewegbaren Ventilteile verschließbare Durchgänge zur Herstellung jeweils einer Verbindung zwischen dem Inneren des Filterelements bzw. der ersten Anschlußstelle mit einem Tankanschluß aufweist. Eine vergleichbare Filtervorrichtung offenbart GB 913414 A.

Beim Betrieb derartiger Vorrichtungen wird die Rücklaufmenge, beispielsweise der Arbeitshydraulik, dem Filter zugeführt und durch das Filtermedium des Filterelementes gereinigt, wobei eine Vollstrom-Feinstfiltration erfolgen kann. In dem gefilterten Fluid, das der Speisepumpe des hydrostatischen Systems zur Verfügung steht, wird mittels des Vorspannventils ein Vorspanndruck aufrecht erhalten, der sicherstellt, dass die von der Speisepumpe des Hydrostaten benötigte Menge der gefilterten Rücklaufmenge entnommen werden kann. Überschüssige Mengen gelangen über das Vorspannventil zum Tankanschluß und werden gegen den Tank abgelassen. Bei hohen, beispielsweise verschmutzungsbedingten Staudrücken am Filterelement erfolgt ein Druckabbau durch Ansprechen des Bypassventils.

Der vorliegenden Erfindung liegt die Aufgabe zugrunde, eine Filtervorrichtung der betrachteten Art zur Verfügung zu stellen, deren Bauweise einen problemlosen Einbau in betreffende Hydrauliksysteme ermöglicht, insbesondere auch bei beengten Platzverhältnissen, bei denen nur ein geringer Einbauraum zur Verfügung steht.

Erfindungsgemäß ist diese Aufgabe durch eine Filtervorrichtung gelöst, die die Merkmale des Patentanspruches 1 in seiner Gesamtheit aufweist.

Demgemäß besteht eine wesentliche Besonderheit der Erfindung darin, dass das Filtergehäuse ein kopfseitiges Deckelteil mit Fluidführungen aufweist, die an den oberen Endbereich des eingesetzten Filterelementes sowie an mindestens einen Filtereingang für Rücklauffluid und an mindestens einen Filterausgang für gereinigtes Fluid angrenzen, wobei das Bypassventil im Bereich des Deckelteiles und in Fluidverbindung mit der Fluidführung am Filtereingang angeordnet ist. Ferner weist das Filtergehäuse für den Austritt überschüssiger Rücklaufmengen zum Tank einen bodenseitigen Tankanschluß auf, wobei das Vorspannventil in dem dem Tankanschluß benachbarten Bodenbereich des Filtergehäuses für das Sperren oder Freigeben einer Fluidverbindung zwischen einem Filterausgang für gereinigtes Fluid und dem Tankanschluß angeordnet ist.

Gegenüber der üblichen, für Bypassventile vorgesehenen Lageanordnung ist das Bypassventil somit vom Filtersumpf weg zur Kopfseite hin, d. h. in den unmittelbaren Bereich des Filtereinganges, versetzt, so dass bei hohen Staudrücken der Druckabbau unmittelbar am Filtereingang erfolgt. Dadurch ergibt sich eine erhöhte Betriebssicherheit insbesondere während Kaltstartphasen.

Ausführungsbeispiele, bei denen das Nachsaugventil unterhalb des Vorspannventils, zum Tankanschluß näherliegend, im Bodenbereich des Filtergehäuses angeordnet sind, eignen sich in besonderer Weise für einen Tankeinbau der Vorrichtung, da keine gesonderten Zuleitungen zum Nachsaugventil erforderlich sind.

Bei vorteilhaften Ausführungsbeispielen ist auch eine dritte Ventileinrichtung, nämlich in Form eines Nachsaugventils, in zur Längsachse des Filterelementes konzentrischer Anordnung vorgesehen. Dadurch ist, ohne von der In-Line-Bauweise abzugehen, sichergestellt, dass bei einem Ausfall des Rücklaufdruckes in der Art einer Notfunktion über das Nachsaugventil vom Tank her eine Fluidmenge zur Saugseite der Speisepumpe des hydrostatischen Kreises gelangen kann, so dass kein Ausfall des beispielsweise angeschlossenen Fahrantriebes erfolgt.

Die Vorrichtung kann in vorteilhafter Weise so gestaltet sein, dass das bei der Filtration von außen nach innen durchströmbare Filtermedium des Filterelementes ein koaxiales, fluiddurchlässiges Stützrohr umgibt, wobei innerhalb und im Abstand von diesem ein konzentrisches Innenrohr angeordnet ist und wobei das an dessen Außenseite befindliche gereinigte Fluid am Ende des Innenrohres mit den im Bodenbereich des Filtergehäuses befindlichen Einheiten in Form des Vorspannventils und des Nachsaugventils in Fluidverbindung ist. Dadurch ist innerhalb des Filterelementes ein Rohrin-Rohrsystem geschaffen, bei dem das Innenrohr, dessen Außenseite bei der Filtration an die Reinseite angrenzt, mit seiner Rohraußenseite die Fluidverbindung zu den bodenseitigen Ventileinheiten hin bildet. Diese Rohrin-Rohr Bauweise führt zu einem besonders kompakten, schlanken Baukörper der Vorrichtung mit hoher Eigenstabilität auch beim Auftreten etwaiger Druckschwankungen im Betrieb.

Bei derartigen Ausführungsbeispielen kann vorzugsweise der Bodenbereich des Filtergehäuses einen das Innenrohr des eingesetzten Filterelementes fortsetzenden Rohrkörper aufweisen, auf dem die Ventilkörper von Vorspannventil und Nachsaugventil für Öffnungs- und Schließbewegungen, die zueinander gegensinnig sind, geführt sind. Diese Ventileinheiten bilden somit einen unmittelbaren koaxialen Fortsatz an der Unterseite des Filterelementes.

Bei besonders vorteilhaften Ausführungsbeispielen ist das Bypassventil in die kopfseitige Endkappe des Filterelementes integriert, wobei in dieser zumindest ein Bypasskanal ausgebildet ist, der bei eingesetztem Filterelement den Filtereingang des Deckelteiles des Filtergehäuses mit der Eingangsseite des Bypassventiles verbindet.

Vorzugsweise ist als Bypassventil ein federbelastetes Schieberventil vorgesehen, dessen Schieber in einem zur Längsachse konzentrischen, hohlzylinderartigen Ventilgehäuse geführt ist und bei durch Staudruck bedingtem Öffnen die Fluidverbindung zwischen Bypasskanal und Innenraum des Ventilgehäuses bildet.

Eine besonders kompakte Bauweise ergibt sich, wenn das Innenrohr des Filterelementes als Bypassrohr vorgesehen ist, das innenseitig zumindest einen Teil der Fluidverbindung zwischen dem Innenraum des Ventilgehäuses des Bypassventiles und dem im Bodenbereich gelegenen Tankanschluß bildet. Hierbei kann das Ventilgehäuse des Bypassventiles einen unmittelbaren Fluidanschluß am zugekehrten Ende des Innenrohres bilden, so dass bei geöffnetem Bypassventil der Druckabbau aus dem Ventilgehäuse unmittelbar durch das als Bypassrohr dienende Innenrohr zum Tankanschluß stattfindet.

Die Erfindung bietet die besonders vorteilhafte Möglichkeit, die hydraulische Schaltung nach Wunsch zu verändern. Während bei der Verwendung des Innenrohres als offenes Bypassrohr bei Ansprechen des Bypassventiles der Druckabbau über das Innenrohr unmittelbar zum Tank stattfindet, kann die Schaltung auch so gestaltet werden, dass das bei Öffnen des Bypassventiles abströmende Fluid nicht zum Tank, sondern aus dem Ventilgehäuse heraus unmittelbar zur Reinseite des Filterelementes, d. h. zum Filterausgang der Vorrichtung gelangt. In diesem Falle ist das Innenrohr des Filterelementes geschlossen, und das Ventilgehäuse weist einen Ausströmbereich auf, der bei geöffnetem Bypassventil die Fluidverbindung vom Innenraum des Ventilgehäuses zum Filterausgang im Deckelteil bildet.

Hierbei kann der Ausströmbereich des Bypassventils durch Öffnungen in einem Ventilgehäusedeckel gebildet sein, der als kopfseitiger, runder Stopfen die Abstützung der Schließfeder des Bypassventiles bildet. Für das über die Öffnungen im Ventilgehäusedeckel abströmende Fluid ergeben sich besonders günstige Strömungsverhältnisse, wenn die Öffnungen im Ventilgehäusedeckel in sternförmig verteilter Anordnung und mit trapezförmiger Öffnungsfläche ausgebildet sind.

Insbesondere in den Fällen, in denen das Innenrohr geschlossen ist und das Fluid bei angesprochenem Bypassventil unmittelbar zum Filterausgang strömt, ist vorzugsweise in die betreffende Fluidführung im Deckelteil ein Bypassschutzsieb integriert, so dass das zur Reinseite gelangende Fluid zumindest von gröberen Verschmutzungen frei ist.

Um auch bei einem Öffnen des Nachsaugventils die Gefahr zu vermeiden, dass über nachgesaugtes Fluid Verschmutzungen zur Reinseite und damit zum Anschluß der Speisepumpe des nachgeordneten hydrostatischen Kreislaufs gelangen kann, ist vorzugsweise eine Nachsaug-Siebanordnung vorgesehen, die in den Fluidweg zwischen den Nachsaugöffnungen des Nachsaugventiles und dem Tankanschluß eingefügt ist.

Nachstehend ist die Erfindung anhand von in der Zeichnung dargestellten Ausführungsbeispielen im Einzelnen erläutert. Es zeigen:
- Fig. 1 bis 3 Symboldarstellungen der Schaltung der Komponenten einer ersten Ausführungsform bzw. einer zweiten Ausführungsform bzw. einer dritten Ausführungsform der erfindungsgemäßen Filtervorrichtung;
- Fig. 4 einen abgebrochen gezeichneten Längsschnitt lediglich des oberen, deckelseitigen Teilabschnittes der Filtervorrichtung in einer der Schaltung von Fig. 1 entsprechenden Ausführungsform, jedoch mit einem demgegenüber zusätzlich vorgesehenen Bypassschutzsieb;
- Fig. 5 einen Längsschnitt, der lediglich den bodenseitigen, unteren Teilabschnitt des in Fig. 4 gezeigten Ausführungsbeispieles der Vorrichtung zeigt;
- Fig. 6 eine der Fig. 4 ähnliche Darstellung, wobei der kopfseitige Teilabschnitt jedoch gegenüber Fig. 4 um 90 Winkelgrad verdreht dargestellt ist;
- Fig. 7 einen gegenüber Fig. 4 bis 6 in kleinerem Maßstab gezeichneten Längsschnitt eines Ausführungsbeispieles der Filtervorrichtung in einer der Schaltung von Fig. 3 entsprechenden Ausführungsform;
- Fig. 8 einen Längsschnitt lediglich des Filterelementes eines Ausführungsbeispieles der erfindungsgemäßen Filtervorrichtung in einer der Schaltung von Fig. 1 entsprechenden Ausführungsform, und
- Fig. 9 eine perspektivische Schrägansicht eines Ventilgehäusedeckels des Bypassventiles des Ausführungsbeispieles von Fig. 7.

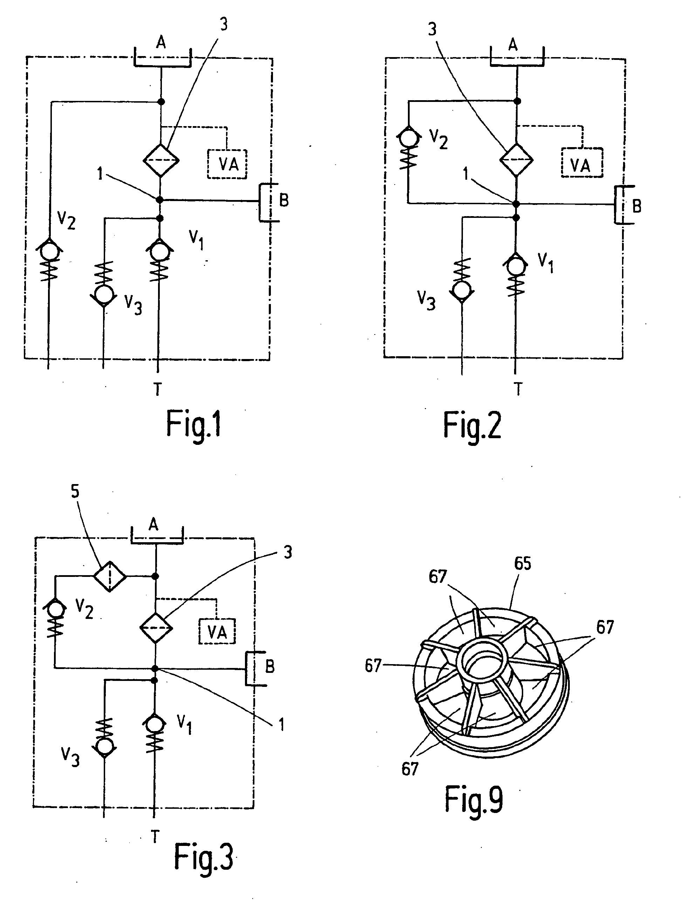

In den in Fig. 1 bis 3 dargestellten Schaltungsbeispielen ist ein Anschluss, zu dem eine Fluid-Rücklaufmenge von einer nicht dargestellten Arbeitshydraulik zugeführt wird, mit A bezeichnet. Über einen mit B bezeichneten Anschluss wird der Speisepumpe eines nicht dargestellten Hydrostaten, beispielsweise eines hydrostatischen Fahrantriebes (nicht dargestellt), eine als Füllmenge benötigte Fluidmenge zugeführt. Diese wird an der Reinseite 1 eines Filterelements 3 abgenommen, d. h. aus dem im Vollstrom gefilterten Rücklaufstrom, der den von der Speisepumpe des nachgeschalteten Hydrostaten benötigten Füllstrom übersteigt. Die Reinseite 1 des Filterelementes 3 steht über ein Vorspannventil V₁ mit dem Tankanschluss T in Verbindung. Das durch Druckbetätigung öffenbare Vorspannventil V₁ ist auf einen Öffnungsdruck eingestellt, der sicherstellt, dass an der Reinseite 1 und damit am Anschluss B ein Druckniveau beibehalten wird, bei dem die Speisepumpe des nachgeschalteten Hydrostaten die benötigte Menge über den Anschluss B entnehmen kann. Standardmäßig ist das Vorspannventil V₁ auf einen Öffnungsdruck von 0,5 Bar eingestellt.

Dem Vorspannventil V₁ ist ein ebenfalls durch Druckbetätigung öffenbares Nachsaugventil V₃ nachgeschaltet, das auf einen geringen Öffnungsdruck von etwa 0,05 Bar eingestellt ist und öffnet, wenn an der Reinseite 1 der Druck der Rücklaufmenge abgefallen ist und daher für den Betrieb der am Anschluss B nachgeschalteten Saugpumpe ein Nachsaugen von Fluid über das Nachsaugventil V₃ aus dem Tank als Notfunktion erforderlich ist. Wenn der am Filterelement 3 anliegende Staudruck einen Schwellenwert übersteigt, was beispielsweise durch eine mit der Schmutzseite am Anschluss A verbundene Verschmutzungsanzeige VA erkannt wird, öffnet ein druckbetätigbares Bypassventil V₂ für einen Druckabbau vom Anschluss A, und zwar bei der Schaltung von Fig. 1 gegen den Tank hin. Üblicherweise ist ein am Filterelement 3 anstehender Staudruck von etwa 2 Bar als Öffnungsdruck für das Bypassventil V₂ vorgesehen. Bei der Darstellung von Fig. 1, bei der das Vorspannventil V₁ auf einen Öffnungsdruck von 0,5 Bar eingestellt ist, wäre dementsprechend das Bypassventil V₂ auf einen Öffnungsdruck von 2,5 Bar eingestellt.

Die Varianten von Fig. 2 und 3 unterscheiden sich gegenüber Fig. 1 dadurch, dass der Druckabbau vom Anschluss A über das Bypassventil V₂ nicht zum Tank hin stattfindet, sondern über die Reinseite 1 des Filterelementes 3 und über das Vorspannventil V₁ zum Tankanschluss T, wobei das Bypassventil V₂ auf einen Öffnungsdruck von 2,0 Bar standardmäßig eingestellt sein kann.

Die in Fig. 3 gezeigte Schaltungsvariante entspricht derjenigen von Fig. 2, abgesehen davon, dass ein Bypassschutzsieb 5 - auch in Form eines Filterelementes - im Strömungsweg des das Bypassventil V₂ durchströmenden Fluides angeordnet ist, so dass der Anschluss B auch bei geöffnetem Bypassventil von Verschmutzungen gesichert ist. Wie sich gezeigt hat ist die Schaltungsvariante von Fig. 2, bei der das Filterelement 3 vom geöffneten Bypassventil V2 unmittelbar umgehbar ist, ohne dass über das Bypassventil abströmendes Fluid ein Schutzsieb oder Schutzfilter durchströmen muss, in solchen Fällen von Vorteil, bei denen es sich um ein Öl hoher Zähigkeit handelt, wie dies beispielsweise während Kaltstartphasen der Fall ist. Wie nachstehend noch näher erläutert wird, ermöglicht die Erfindung auf einfache Weise ein Umstellen der Schaltung zwischen den in Fig. 1 oder den in Fig. 2 und 3 dargestellten Betriebsarten.

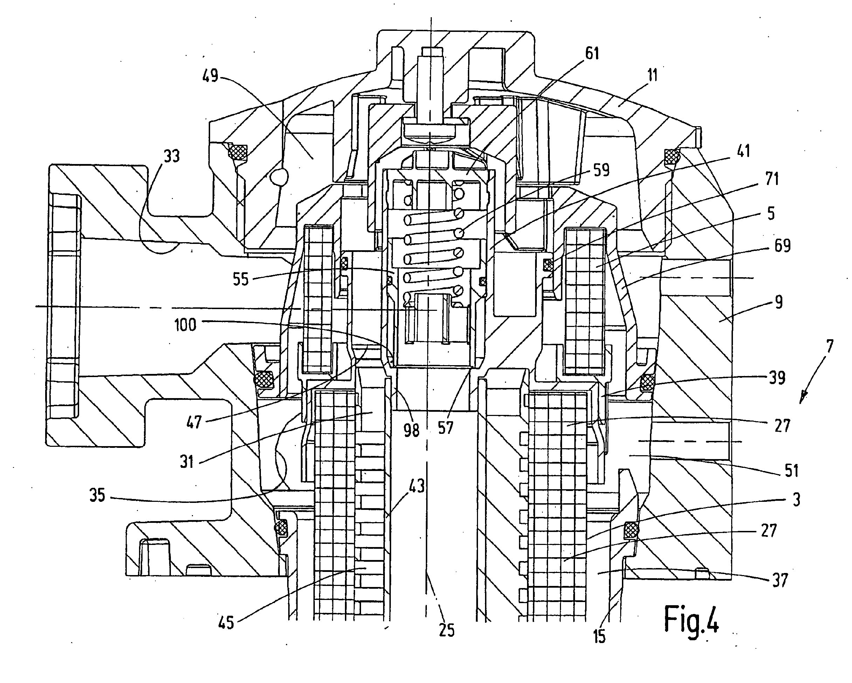

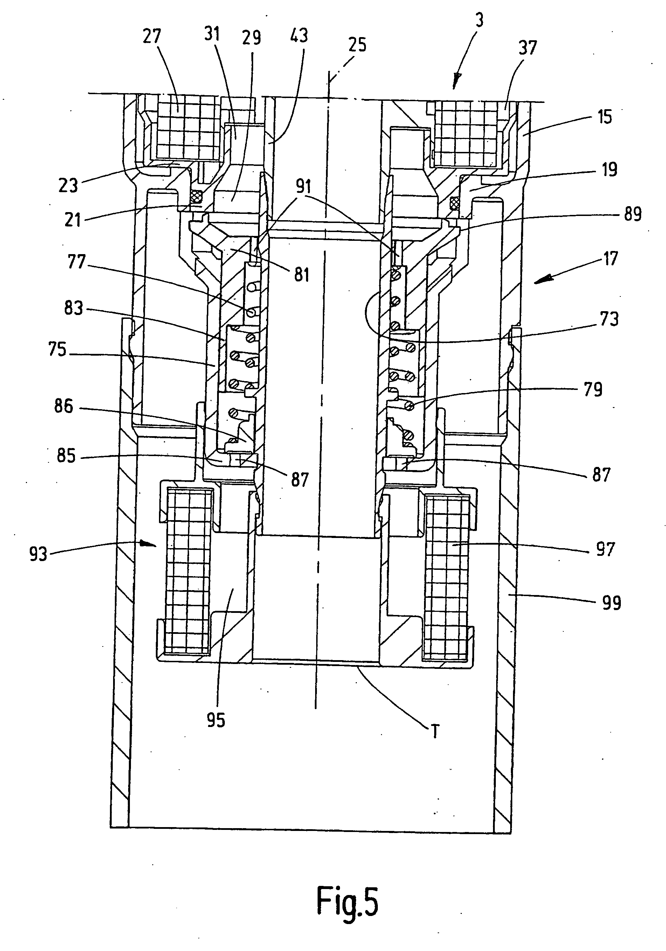

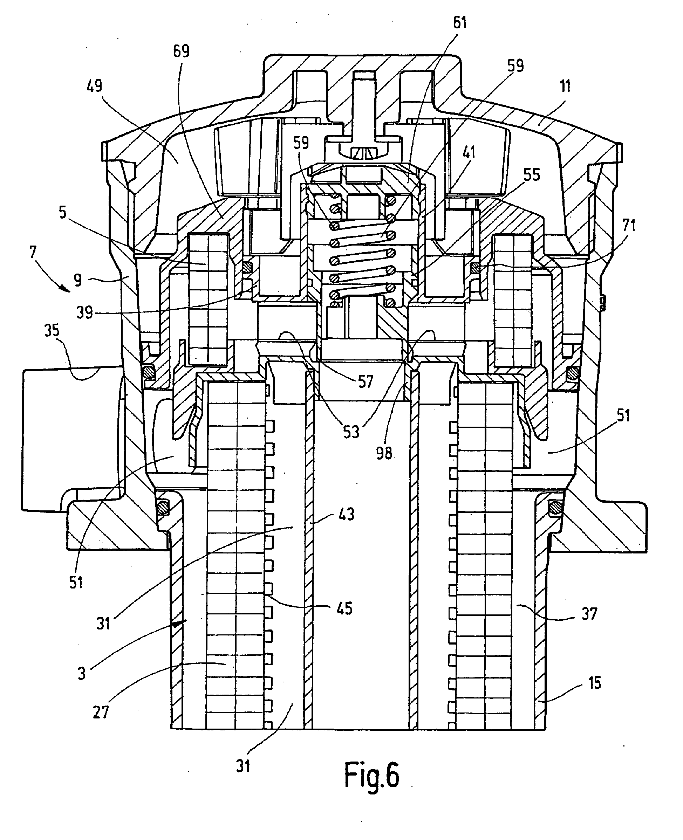

Fig. 4 und 6 zeigen jeweils den kopfseitigen Endbereich eines Filtergehäuses 7 der Vorrichtung in einer Ausführungsform, bei der ein Bypassschutzsieb 5 oder ein Bypassfilterelement vorhanden ist. In diesen Fig. sind der kopfseitige Deckelteil des Filtergehäuses 7 mit 9 und der mit dem Deckelteil 9 verschraubte obere Endabschluss mit 11 bezeichnet. Nach Abschrauben des Endabschlusses 11 ist ein Filterelement 3 von im großen Ganzen kreiszylinderförmiger Gestalt in den hohlzylinderartigen Hauptkörper 15 einbringbar, der in seinem Bodenbereich 17, siehe Fig. 5, eine Elementaufnahme 19 bildet, in der ein Ringkörper 21 des Filterelementes 3 unter Bildung einer Abdichtung aufnehmbar ist. Der Ringkörper 21 bildet einen zur Längsachse 25 des Filterelementes 13 koaxialen Fortsatz der bodenseitigen Endkappe 23 des Filterelementes 13, wobei die Endkappe 23 eine Einfassung für das untere Ende des Filtermediums 27 des Filterelementes 3 bildet. Der Ringkörper 21 umgibt einen Öffnungsbezirk 29 der Endkappe 23. Dieser Bezirk 29 ist mit dem die Reinseite bei der Filtration bildenden inneren Filterhohlraum 31 des Filterelementes 3 in Fluidverbindung.

Fig. 4 zeigt den oberen Vorrichtungsbereich in einer Position, in der der Filterausgang 33 sichtbar ist, der dem Anschluss B in Fig. 1 bis 3 entspricht. Demgegenüber zeigt Fig. 6 diesen Vorrichtungsabschnitt in der Drehposition, in der der Filtereingang 35 zu sehen. Wie letztgenannter Fig. ebenfalls entnehmbar ist, ist bei eingesetztem Filterelement 3 der Filtereingang 35 über Fluidführungen 51 in Fluidverbindung mit der die Schmutzseite bei der Filtration bildenden Außenseite 37 des Filtermediums 27, das bei der Filtration von außen zum inneren Filterhohlraum 31 hin, der die Reinseite bildet, durchströmt wird. Die obere, kopfseitige Endkappe 39 des Filterelementes 3 bildet nicht nur die Einfassung für das obere Ende des Filtermediums 27, sondern ein hohlzylinderförmiges Ventilgehäuse 41 für ein Bypassventil sowie eine Lagerung für ein zur Längsachse 25 konzentrisches Innenrohr 43, das unter Freilassung des die Reinseite bildenden Filterhohlraumes 31 in einem Abstand von dem Stützrohr 45 verläuft, an dessen Außenseite das Filtermedium 27 anliegt. Der die Reinseite bildende Filterhohlraum 31 ist über Durchgänge in der Endkappe 39, von denen in Fig. 4 einer zu sehen und mit 47 bezeichnet ist, mit einer Fluidführung 49 im Deckelteil 9 in Verbindung, die zum Filterausgang 33, d. h. zum Anschluss B führt. Die die Schmutzseite bildende Außenseite 37 des Filtermediums 27 ist wiederum im Deckelteil 9 mit der Fluidführung 51 in Verbindung, die im Deckelteil 9 mit dem Filtereingang 35, d. h. dem Anschluß A in Verbindung ist. Wie aus Fig. 6 zu ersehen ist, erstrecken sich von der Fluidführung 51 her Bypasskanäle 53 zum Innenraum des Ventilgehäuses 41. In dem Ventilgehäuse 41 ist ein Ventilschieber 55 des als Schieberventil ausgebildeten Bypassventil V₂ verschiebbar geführt. Das Ventilgehäuse 41 bildet einen zur Längsachse 25 konzentrischen Hohlzylinder, an dessen Innenwand der Ventilschieber 55 geführt ist, der eine endseitige Schließkante 57 aufweist, die, wenn der Ventilschieber 55 in die Öffnungsstellung verschoben ist, den Fluidweg von den Bypasskanälen 53 ins Innere des Ventilgehäuses 41 und damit in das Innenrohr 43 freigibt. Bei Ausführungsbeispielen, bei denen, wie in Fig. 4, bis 6 gezeigt, das Innenrohr 43 offen, d. h. durchgängig ist, kann bei geöffnetem Bypassventil V₂ der Druckabbau durch Abströmen des Fluids durch das Innenrohr 43 zum Tankanschluss T erfolgen. Der Ventilschieber 55 ist in die Schließstellung mittels einer Druckfeder 59 vorgespannt, die zwischen Ventilschieber 55 und einem den endseitigen Abschluss des Ventilgehäuses 41 bildenden Deckel 61 eingespannt ist. Bei den Ausführungsbeispielen mit durchgängigem Innenrohr 43 (Fig. 4 bis 6 und 8) ist der Ventilgehäusedeckel 61 ein runder Stopfen in Form einer geschlossenen Kappe.

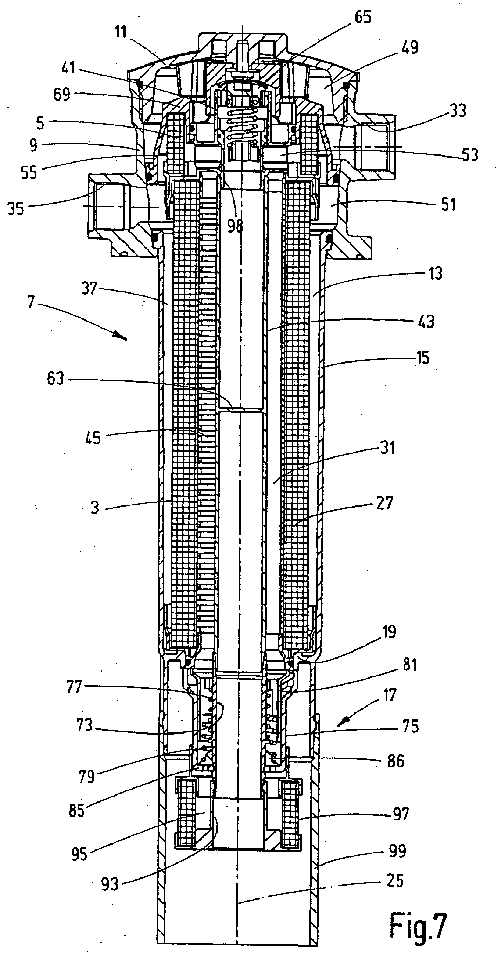

Wie bereits erwähnt, läßt sich die Vorrichtung auf einfache Weise schaltungsmäßig so verändern, dass über das Bypassventil V₂ abströmendes Fluid nicht unmittelbar zum Tank gelangt, wie dies bei der Schaltung von Fig. 1 der Fall ist, sondern dass entsprechend den Schaltungen von Fig. 2 und 3 bei geöffnetem Bypassventil V₂ das abströmende Fluid zur Reinseite 1 des Filterelementes 3 gelangt und von dort über das Vorspannventil V₁ zum Tankanschluss T gelangen kann. Um die Schaltung diesbezüglich auszubilden, d. h. die Vorrichtung in den in Fig. 7 gezeigten Zustand zu bringen, sind lediglich zwei Maßnahmen erforderlich, nämlich der Verschluss des Innenrohres 43, beispielsweise mittels des in Fig. 7 mit 63 bezeichneten Quersteges. Zum zweiten wird anstelle eines Gehäusedeckels 61 in Form einer geschlossenen Kappe, ein an der Oberseite offener Gehäusedeckel 65 benutzt, wie er in Fig. 9 gesondert dargestellt ist. Dieser weist, wie aus Fig. 9 deutlich ersichtlich ist, sternförmig angeordnete Ausströmöffnungen 67 trapezförmiger Öffnungsfläche auf, über die Fluid aus dem Ventilgehäuse 41 heraus, ohne dass ein stärkerer Strömungswiderstand zu überwinden wäre, zur Fluidführung 49 und damit zum Filterausgang 33 abströmen kann, wenn der Ventilschieber 55 gegen die Kraft der Feder 59 eine Öffnungsbewegung durchführt, bei der die Schließkante 57 einen Öffnungsspalt bildet, so dass aus den Bypasskanälen 53 Fluid in das Ventilgehäuse 41 einströmt.

Die dadurch bei geöffnetem Bypassventil V₂ gebildete direkte Strömungsverbindung zwischen Filtereingang 35 und Filterausgang 33 ist bei zähflüssigen Fluiden, beispielsweise bei während Kaltstartphasen vorherrschender großer Zähigkeit des Öles, vorteilhaft, insbesondere dann, wenn den Bypasskanälen 53 kein Bypassschutzsieb 5 oder Filter vorgeschaltet ist. Andererseits wird durch Benutzung eines Bypassschutzsiebes oder Filters die Gefahr vermieden, dass bei geöffnetem Bypassventil V₂ Verschmutzungen zum Filterausgang 33 gelangen können. Bei den in Fig. 4 bis 7 gezeigten Ausführungsbeispielen ist jeweils ein Bypassschutzsieb 5 innerhalb eines glockenförmigen Zwischenkörpers 69 so angeordnet, dass er im Fluidweg zwischen den Fluidführungen 51 und den Bypasskanälen 53 gelegen ist. Der glockenförmige Zwischenkörper 69 trennt innerhalb des Deckelteiles 9 die Fluidführungen 49 und 51 voneinander und bildet gleichzeitig die Abdichtung der oberen Endkappe 39 des Filterelementes 3.

Die Fig. 5 und 7 zeigen den an die Elementaufnahme 19 anschließenden unteren Bodenbereich 17, dessen Einzelheiten am deutlichsten aus Fig. 5 zu ersehen sind. Wie gezeigt ist das Innenrohr 43 des Filterelements 3 zum Tankanschluss T hin nach unten verlängert. Der die Reinseite bildende Filterhohlraum 31 des Filterelementes 3 ist über die Öffnungsbezirke 29 in der Endkappe 23 des Filterelementes mit einem Rohrkörper 73 in Verbindung. Dieser ist zur Bildung eines Federhauses von einem zur Längsachse konzentrischen, hohlzylinderartigen Federgehäuse 75 umgeben. In diesem Federhaus befinden sich eine Schließfeder 77 für das Vorspannventil V₁ sowie eine Feder 79 für das Nachsaugventil V₃, wobei beide Druckfedern den Rohrkörper 73 umgeben. Das Vorspannventil V₁ weist einen axial verschiebbaren Ventilkörper 81 auf, der an der Außenseite des Rohrkörpers 73 sowie mit einem hohlzylinderartigen Fortsatz 83 an der Innenseite des Federgehäuses 75 geführt ist. Letzteres weist einen Topfboden 85, durch den sich der Rohrkörper 73 hindurch erstreckt, sowie mehrere Nachsaugöffnungen 87 auf. Dieser Topfboden 85 bildet den Ventilsitz für den als Ringplatte ausgebildeten Ventilkörper 86 des Nachsaugventiles V₃.

Der Ventilkörper 81 des Vorspannventiles V₁ wirkt mit dem Ringkörper 21 an der Endkappe 23 des eingesetzten Filterelementes 3 als Ventilsitz zusammen, gegen den der Ventilkörper 81 durch die Schließfeder 77 angedrückt wird. Wenn der Ventilkörper 81 gegen die Kraft der Schließfeder 77 abhebt, strömt Fluid aus dem Innenraum 31, d. h. der Reinseite des Filterelementes 3, über den offenen Bezirk 29 der Endkappe 23 an der Außenseite des Federgehäuses 75 entlang direkt zum Tankanschluss T hin. Wenn in die Vorrichtung kein Filterelement 3 eingesetzt ist, bildet der Ventilkörper 81 mit einem radial außenliegenden Ventiltellerrand 89 die Abdichtung der Vorrichtung gegenüber der Tankanschlussseite, indem der Ventiltellerrand 89 an der Elementaufnahme 19 des Gehäusehauptteiles 15 dichtend anliegt.

Der Innenraum des Federgehäuses 75 ist über im Ventilkörper 81 ausgebildete Fluiddurchgänge 91 und über die Öffnungsbezirke 29 der Endkappe 23 mit dem Filterinnenraum 31, d. h. mit der Reinseite, in Fluidverbindung. Zu dieser Reinseite hin kann, wenn der als Ringplatte ausgebildete Ventilkörper 86 gegen die Kraft der Schließfeder 79 von den Nachsaugöffnungen 87 abhebt, Fluid von der Seite des Tankanschlusses T nachgesaugt werden, um über die Fluiddurchgänge 91 des Ventilkörpers 81 zum Hohlraum 31 und damit zur Reinseite und zum Anschluss B zu gelangen.

Wie Fig. 5 ebenfalls entnehmbar ist, schließt sich an die Unterseite des Bodens 85 des Federgehäuses 75 ein Siebgehäuse 93 an, dessen Innenraum 95 an die Nachsaugöffnungen 87 angrenzt. Zwischen dem Innenraum 95 und dessen Außenseite, d. h. dem Tankanschluss T, befindet sich ein Nachsaugsieb 97 oder Nachsaugfilter, so dass beim Nachsaugvorgang kein unmittelbares, ungefiltertes Nachsaugen von Fluid vom Tankanschluss T her stattfindet.

Wie aus Fig. 5 und 7 entnehmbar, schließt sich an den Bodenbereich 17 des Gehäusehauptkörpers 15 ein Verlängerungsrohr 99 an, das als Tauchrohr gewünschter Länge, beispielsweise bei einem Tankeinbau, je nach Einbaubedingungen gestaltet sein kann.

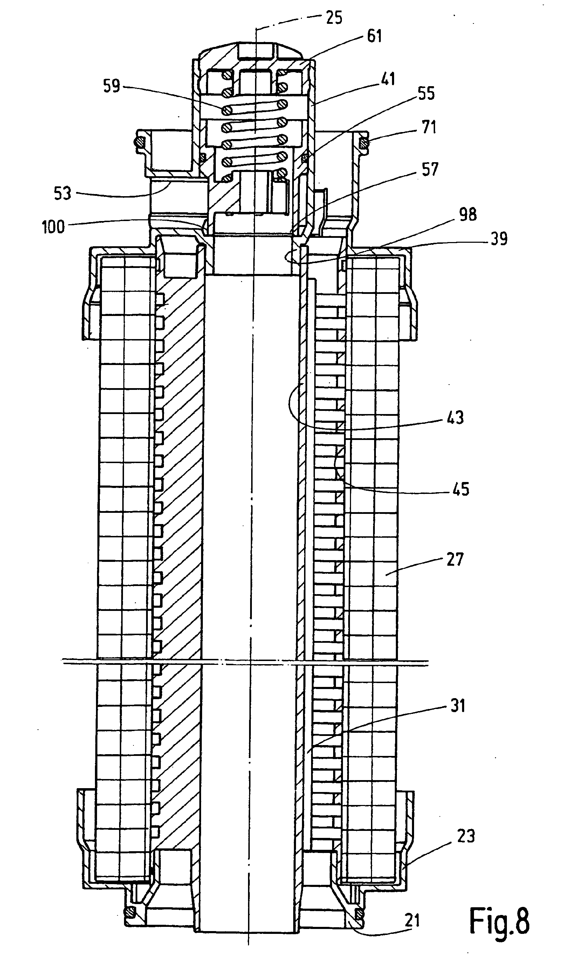

In Fig. 8 ist ein Filterelement 3 gesondert dargestellt, das ein durchgängig offenes Innenrohr 43 und dementsprechend einen Ventilgehäusedeckel 61 in Form einer geschlossenen Kappe aufweist. Wie ersichtlich, bildet die obere Endkappe 39 einen in das Ende des Innenrohres 43 passend ragenden Rohrstutzen 98, dessen Öffnungsrand 100 mit der Schließkante 57 des Ventilschiebers 55 zusammen wirkt. Beim Abheben der Schließkante 57 vom Rand 100 ist somit der Fluidweg von den Bypasskanälen 53 her ins Innere des Ventilgehäuses 41 und ins Innere des Innenrohres 43 freigegeben, das nunmehr als Bypassrohr zur Tankseite hin fungiert.

Mit der erfindungsgemäßen Filtervorrichtung ist ein neuartiges Rohr- in Rohrsystem gebildet, bei dem das Bypassrohr zentrisch durch das Elementstützrohr geführt ist und die Position des Bypassventils wechselt vom "Filtersumpf" nach oben. Durch das Verschließen des Bypassrohres und eines anderen Bypassverschlußdeckels kann die Schaltlogig der Filtervorrichtung einfach geändert werden, d.h. der Bypass geht direkt zur Saugseite. Möglich ist dies unter anderem durch den Einsatz des neuartigen, innen hohlen Bypassventils in Schieberbauform. Weiter ist mit der erfindungsgemäßen Filtervorrichtung gewährleistet, dass ohne eingesetztes Filterelement es keinen Speisedruckaufbau gibt, was eine Indikation für das fehlende Filterelement darstellt. Die neuartige Bypasskappe in sog. Cross-Flow-Bauweise erlaubt durch die besondere Trapezform der Querkanäle, dass der Querschnitt des gefilterten Öls sich nicht verengt, so dass Energieverluste im Filtrierbetrieb vermieden sind.

## Patentansprüche

1. Filtervorrichtung, insbesondere Rücklauf-Saugfilter, mit mindestens einem Filtergehäuse (7), in dem mindestens ein eine Längsachse (25) definierendes Filterelement (3) aufnehmbar ist, und mit mindestens zwei Ventileinheiten in Form mindestens eines Vorspannventils (V₁), wobei die genannten Ventileinheiten in zur Längsachse (25) des jeweiligen Filterelementes (3) konzentrischer Anordnung längs dieser Längsachse (25) angeordnet sind, **dadurch gekennzeichnet, dass** das Filtergehäuse (7) ein kopfseitiges Deckelteil (9) mit Fluidführungen (49, 51) aufweist, die an den oberen Endbereich des eingesetzten Filterelementes (3) sowie an mindestens einen Filtereingang (35) für Rücklauffluid und an mindestens einen Filterausgang (33) für gereinigtes Fluid angrenzen, dass mindestens eine Ventileinheit als Bypassventil (V₂) ausgebildet ist, welches im Bereich des Deckelteils (9) und in Fluidverbindung mit der Fluidführung (51) am Filtereingang (35) angeordnet ist, dass das Filtergehäuse (7) für den Austritt überschüssiger Rücklaufmengen zum Tank einen bodenseitigen Tankanschluss (T) aufweist und dass das Vorspannventil (V₁) in dem dem Tankanschluss (T) benachbarten Bodenbereich (17) des Filtergehäuses (7) für das Sperren oder Freigeben einer Fluidverbindung zwischen einem Filterausgang (33) für gereinigtes Fluid und dem Tankanschluss (T) angeordnet ist.

2. Filtervorrichtung nach Anspruch 1, **dadurch gekennzeichnet, dass** eine dritte Ventileinrichtung in Form eines Nachsaugventils (V₃) in zur Längsachse (25) des Filterelementes (3) konzentrischer Anordnung vorgesehen ist.

3. Filtervorrichtung nach Anspruch 1 oder 2, **dadurch gekennzeichnet, dass** das Nachsaugventil (V₃) unterhalb des Vorspannventils (V₁), zum Tankanschluss (T) näherliegend, im Bodenbereich (17) des Filtergehäuses (7) angeordnet ist.

4. Filtervorrichtung nach einem der vorhergehenden Ansprüche, **dadurch gekennzeichnet, dass** das bei der Filtration von außen nach innen durchströmbare Filtermedium (27) des Filterelementes (3) ein koaxiales, fluiddurchlässiges Stützrohr (45) umgibt, dass innerhalb und im Abstand von diesem ein konzentrisches Innenrohr (43) angeordnet ist und dass das an dessen Außenseite befindliche gereinigte Fluid am Ende des Innenrohres (43) mit den im Bodenbereich (17) des Filtergehäuses (7) befindlichen Ventileinheiten in Form des Vorspannventils (V₁) und des Nachsaugventils (V₃) in Fluidverbindung ist.

5. Filtervorrichtung nach Anspruch 4, **dadurch gekennzeichnet, dass** der Bodenbereich (17) des Filtergehäuses (7) einen das Innenrohr (43) des eingesetzten Filterelementes (3) fortsetzenden Rohrkörper (73) aufweist, auf dem die Ventilkörper (81 bzw. 86) von Vorspannventil (V₁) und Nachsaugventil (V₃) für Öffnungs- und Schließbewegungen, die zueinander gegensinnig sind, verschiebbar geführt sind.

6. Filtervorrichtung nach Anspruch 5, **dadurch gekennzeichnet, dass** Schließfedern (77, 79) beider genannter Ventile den Rohrkörper (73) umgeben.

7. Filtervorrichtung nach Anspruch 6, **dadurch gekennzeichnet, dass** der Ventilkörper (81) des Vorspannventiles (V₁) einen sich entlang der Außenseite der Schließfedern (77, 79) erstreckenden hohlzylinderartigen Fortsatz (83) aufweist, der außenseitig an der Innenseite eines Federgehäuses (75) geführt ist, das in Form eines Topfes mit zylindrischer Wand den Rohrkörper (73) konzentrisch umgibt und dessen Boden (85) vom Rohrkörper (73) durchgriffen ist, dessen Ende den Tankanschluss (T) bildet.

8. Filtervorrichtung nach Anspruch 7, **dadurch gekennzeichnet, dass** der Boden (85) des Federgehäuses (75) den Ventilsitz für eine den Ventilkörper des Nachsaugventils (V₃) bildende Ringplatte (86) bildet, durch die Nachsaugöffnungen (87) im Boden (85) des Federgehäuses (75) sperrbar oder freigebbar sind.

9. Filtervorrichtung nach Anspruch 8, **dadurch gekennzeichnet, dass** der Ventilkörper (81) des Vorspannventiles (V₁) Fluiddurchgänge (91) aufweist, die das Innere des Topfes des Federgehäuses (75) mit der an der Außenseite des Rohrkörpers (73) und des Innenrohres (43) des eingesetzten Filterelementes (3) befindlichen Reinseite verbinden.

10. Filtervorrichtung nach einem der Ansprüche 1 bis 9, **dadurch gekennzeichnet, dass** das Bypassventil (V₂) in die kopfseitige Endkappe (39) des Filterelementes (3) integriert ist, in der zumindest ein Bypasskanal (53) ausgebildet ist, der bei eingesetztem Filterelement (3) den Filtereingang (35) des Deckelteiles (9) des Filtergehäuses (7) mit der Eingangsseite des Bypassventiles (V₂) verbindet.

11. Filtervorrichtung nach Anspruch 10, **dadurch gekennzeichnet, dass** als Bypassventil ein federbelastetes Schieberventil vorgesehen ist, dessen Schieber (55) in einem zur Längsachse (25) konzentrischen, hohlzylinderartigen Ventilgehäuse (41) geführt ist und bei durch Staudruck bedingtem Öffnen die Fluidverbindung zwischen Bypasskanal (53) und Innenraum des Ventilgehäuses (41) bildet.

12. Filtervorrichtung nach Anspruch 11, **dadurch gekennzeichnet, dass** das Innenrohr (43) des Filterelementes (3) als Bypassrohr vorgesehen ist, das innenseitig zumindest einen Teil der Fluidverbindung zwischen dem Innenraum des Ventilgehäuses (41) des Bypassventiles (V₂) und dem im Bodenbereich (17) gelegenen Tankanschluß (T) bildet.

13. Filtervorrichtung nach Anspruch 12, **dadurch gekennzeichnet, dass** das Innenrohr (43) des Filterelementes (3) geschlossen ist und dass das Ventilgehäuse (41) einen Ausströmbereich (65, 67) aufweist, der bei geöffnetem Bypassventil (V₂) die Fluidverbindung vom Innenraum des Ventilgehäuses (41) zum Filterausgang (33) im Deckelteil (9) bildet.

14. Filtervorrichtung nach Anspruch 13, **dadurch gekennzeichnet, dass** der Ausströmbereich durch Öffnungen (67) in einem Ventilgehäusedeckel (65) gebildet ist, der als kopfseitiger, runder Stopfen die Abstützung der Schließfeder (59) des Bypassventiles (V₂) bildet.

15. Filtervorrichtung nach Anspruch 14, **dadurch gekennzeichnet, dass** die Öffnungen (67) in sternförmig verteilter Anordnung und mit trapezförmiger Öffnungsfläche im Ventilgehäusedeckel (65) ausgebildet sind.

16. Filtervorrichtung nach einem der Ansprüche 10 bis 15, **dadurch gekennzeichnet, dass** in die betreffende Fluidführung (51) des Deckelteiles (9) ein im jeweiligen Bypasskanal (53) angeordnetes Bypassschutzsieb (5) oder Bypassfilter integriert ist.

17. Filtervorrichtung nach einem der Ansprüche 7 bis 16, **dadurch gekennzeichnet, dass** ein eine Einfassung am Boden (85) des Topfes des Federgehäuses (75) und einen Fortsatz des Rohrkörpers (73) bildender Träger (93) für eine Nachsaug-Siebanordnung (97) oder Nachsaugfilter vorgesehen ist, die in den Fluidweg zwischen den Nachsaugöffnungen (87) des Nachsaugventiles (V₃) und dem Tankanschluß (T) eingefügt ist.

## Claims

1. A filter device, in particular a reflux suction filter, comprising at least one filter housing (7) in which at least one filter element (3) defining a longitudinal axis (25) can be accommodated, and comprising at least two valve units, in the form of at least one pre-loading valve (V₁), the aforementioned valve units being arranged in an arrangement along this longitudinal axis (25) concentric to the longitudinal axis (25) of the respective filter element (3), **characterised in that** the filter housing (7) has a head-side cover part (9) with fluid guides (49, 51) which border the upper end region of the inserted filter element (3) as well as at least one filter input (35) for reflux fluid and at least one filter output (33) for cleaned fluid, that at least one valve unit is in the form of a bypass valve (V₂) which is located in the region of the cover part (9) and is in fluid connection with the fluid guide (51) at the filter input (35), that the filter housing (7) has a bottom-side tank connection (T) for the discharge of excess reflux amounts to the tank, and that the pre-loading valve (V₁) in the bottom region (17) of the filter housing (7) adjacent to the tank connection (T) for blocking or clearing a fluid connection is located between a filter output (33) for cleaned fluid and the tank connection (T).

2. The filter device according to Claim 1, **characterised in that** a third valve device in the form of a replenishing valve (V₃) is provided in an arrangement which is concentric to the longitudinal axis (25) of the filter element (3).

3. The filter device according to Claim 1 or 2, **characterised in that** the replenishing valve (V₃) is located underneath the pre-loading valve (V₁), nearer the tank connection (T), in the bottom region (17) of the filter housing (7).

4. The filter device according to any of the preceding claims, **characterised in that** the filter medium (27) of the filter element (3), through which flow can take place from outside to inside during filtration, surrounds a coaxial, fluid-permeable support pipe (45), that within and at a distance from the latter there is a concentric interior pipe (43), and that the cleaned fluid which is located on its exterior on the end of the interior pipe (43) is fluid-connected to the valve units located in the bottom region (17) of the filter housing (7) in the form of the pre-loading valve (V₁) and of the replenishing valve (V₃₎.

5. The filter device according to Claim 4, **characterised in that** the bottom region (17) of the filter housing (7) has a pipe body (73) which continues the interior pipe (43) of the inserted filter element (3) and on which the valve bodies (81 and 86) of the pre-loading valve (V₁) and replenishing valve (V₃) are guided for opening and closing movements which are opposite one another.

6. The filter device according to Claim 5, **characterised in that** closing springs (77, 79) of the two aforementioned valves surround the pipe body (73).

7. The filter device according to Claim 6, **characterised in that** the valve body (81) of the pre-loading valve (V₁) has a hollow cylindrical extension (83) which extends along the exterior of the closing springs (77, 79) and which is guided outside on the inside of a spring housing (75) which in the form of a cup with a cylindrical wall concentrically surrounds the pipe body (73) and the bottom (85) of which is penetrated by the pipe body (73) the end of which forms the tank connection (T).

8. The filter device according to Claim 7, **characterised in that** the bottom (85) of the spring housing (75) forms the valve seat for a ring plate (86) which forms the valve body of the replenishing valve (V₃) and by which the replenishment openings (87) in the bottom (85) of the spring housing (75) can be blocked or cleared.

9. The filter device according to Claim 8, **characterised in that** the valve body (81) of the pre-loading valve (V₁) has fluid passages (91) which connect the interior of the cup of the spring housing (75) to the clean side which is located on the exterior of the pipe body (73) and of the interior pipe (43) of the inserted filter element (3).

10. The filter device according to any of Claims 1 to 9, **characterised in that** the bypass valve (V₂) is integrated into the head-side end cap (39) of the filter element (3), in the cap at least one bypass channel (53) being formed which with the filter element (3) inserted connects the filter input (35) of the cover part (9) of the filter housing (7) to the input side of the bypass valve (V₂).

11. The filter device according to Claim 10, **characterised in that** the bypass valve is a spring-loaded spool valve the spool (55) of which is guided in a hollow-cylindrical valve housing (41) which is concentric to the longitudinal axis (25) and during opening, which is dictated by the dynamic pressure, forms the fluid connection between the bypass channel (53) and interior of the valve housing (41).

12. The filter device according to Claim 11, **characterised in that** the interior pipe (43) of the filter element (3) is a bypass pipe which on the inside forms at least part of the fluid connection between the interior of the valve housing (41) of the bypass valve (V₂) and the tank connection (T) located in the bottom region (17).

13. The filter device according to Claim 12, **characterised in that** the interior pipe (43) of the filter element (3) is closed and that the valve housing (41) has an outflow region (65, 67) which, with the bypass valve (V₂) open, forms the fluid connection from the interior of the valve housing (41) to the filter output (33) in the cover part (9).

14. The filter device according to Claim 13, **characterised in that** the outflow region is formed by openings (67) in a valve housing cover (65) which, as a head-side, round plug, forms the support of the closing spring (59) of the bypass valve (V₂).

15. The filter device according to Claim 14, **characterised in that** the openings (67) are made in an arrangement which is distributed in a star shape and with a trapezoidal opening surface in the valve housing cover (65).

16. The filter device according to any of Claims 10 to 15, **characterised in that** a protective bypass screen (5) or bypass filter which is located in the respective bypass channel (53) is integrated into the respective fluid guide (51) of the cover part (9).

17. The filter device according to any of Claims 7 to 16, **characterised in that** a carrier (93) which forms an enclosure on the bottom (85) of the cup of the spring housing (75) and an extension of the pipe body (73) is provided for a replenishment screen arrangement (97) or replenishment filter which is inserted into the fluid path between the replenishment openings (87) of the replenishing valve (V₃) and the tank connection (T).

## Revendications

1. Dispositif de filtration, notamment filtre de reflux à aspiration, comprenant au moins un corps (7) de filtre, dans lequel peut être reçu au moins un élément (3) filtrant définissant un axe (25) longitudinal et comprenant au moins deux groupes de vanne sous la forme d'au moins une vanne (V1) d'asservissement, les groupes de vanne mentionnés étant disposés par rapport à l'axe (25) longitudinal de l'élément (3) filtrant respectif suivant un agencement concentrique le long de cet axe (25) longitudinal, **caractérisé en ce que** le corps (7) de filtre a une partie (9) de couvercle du côté de la tête, ayant des passages (49,51), pour du fluide qui sont voisins de la zone d'extrémité supérieure de l'élément (3) filtrant inséré, ainsi que d'au moins une entrée (35) du filtre pour du fluide de reflux et d'au moins une sortie (33) du filtre pour du fluide épuré, **en ce qu'**au moins un groupe de vanne est constitué en vanne (V2) de dérivation qui est disposée dans la zone de la partie (9) de couvercle et en communication fluidique avec le passage (51) pour du fluide à l'entrée (35) du filtre, **en ce que** le corps (7) du filtre a, pour la sortie de quantités de reflux en excès vers la cuve, un raccord (T) de cuve du côté du fond et **en ce que** la vanne (V1) d'asservissement est disposée dans la zone (17) de fond voisine du raccord (T) de cuve du corps (7) du filtre pour l'obturation ou pour le dégagement d'une liaison fluidique entre une sortie (33) du filtre pour du fluide épuré et le raccord (T) de cuve.

2. Dispositif de filtration suivant la revendication 1,
**caractérisé en ce qu'**un troisième dispositif de vanne, sous la forme d'une vanne (V3) de post-aspiration, est prévu suivant un agencement concentrique par rapport à l'axe (25) longitudinal de l'élément (3) filtrant.

3. Dispositif de filtration suivant l'une des revendications 1 ou 2,
**caractérisé en ce que** la vanne (V3) de post-aspiration est disposée en dessous de la vanne (V1) d'asservissement à proximité du raccord (T) de cuve dans la zone (17) de fond du corps (7) du filtre.

4. Dispositif de filtration suivant l'une des revendications 1 ou 2,
**caractérisé en ce que** le milieu (27) filtrant de l'élément (3) filtrant, pouvant être traversé de l'extérieur vers l'intérieur à la filtration, entoure un tube (45) d'appui coaxial et perméable au fluide, **en ce qu'**à l'intérieur et à distance de celui-ci est disposé un tube (43) intérieur concentrique et **en ce que** le fluide épuré, se trouvant à son côté extérieur, est, à l'extrémité du tube (43) intérieur, en communication fluidique avec les groupes de vanne se trouvant dans la zone (17) de fond du corps (7) de filtre sous la forme de la vanne (V1) d'asservissement et de la vanne (V3) de post-aspiration.

5. Dispositif de filtration suivant la revendication 4,
**caractérisé en ce que** la zone (17) de fond du corps (7) du filtre a un corps (73) tubulaire, qui prolonge le tube (43) intérieur de l'élément (3) filtrant inséré et sur lequel sont guidés, à coulissement, les obturateurs (81 ou 86) de la vanne (V1) d'asservissement et de la vanne (V3) de post-aspiration pour des mouvements d'ouverture et de fermeture qui sont de sens opposé l'un à l'autre.

6. Dispositif de filtration suivant la revendication 5,
**caractérisé en ce que** les ressorts (77,79) de fermeture des deux vannes mentionnées entourent le corps (73) tubulaire.

7. Dispositif de filtration suivant la revendication 6,
**caractérisé en ce que** l'obturateur (81) de la vanne (V1) d'asservissement a un prolongement (83) de type en cylindre creux, s'étendant le long du côté extérieur des ressorts (77,79) de fermeture et guidé du côté extérieur sur le côté intérieur d'un boîtier (75) de ressorts, qui entoure concentriquement, sous la forme d'un pot à paroi cylindrique, le corps (73) tubulaire et dont le fond (85) est traversé par le corps (73) tubulaire dont l'extrémité forme le raccord (T) de cuve.

8. Dispositif de filtration suivant la revendication 7,
**caractérisé en ce que** le fond (85) du boîtier (75) de ressorts forme le siège de vanne pour un plateau (86) annulaire formant l'obturateur de la vanne (V3) de post-aspiration, plateau par lequel les ouvertures (87) de post-aspiration du fond (85) du boîtier (75) de ressorts pouvant être obturées ou dégagées.

9. Dispositif de filtration suivant la revendication 8,
**caractérisé en ce que** l'obturateur (81) de la vanne (V1) d'asservissement a des passages (91) pour du fluide, qui mettent l'intérieur du pot du boîtier (75) de ressorts en communication avec le côté propre, se trouvant du côté extérieur du corps (73) tubulaire et du tube (43) intérieur, de l'élément (3) filtrant inséré.

10. Dispositif de filtration suivant l'une des revendications 1 à 9,
**caractérisé en ce que** la vanne (V2) de dérivation est intégrée dans le chapeau (39) d'extrémité du côté de la tête de l'élément (3) filtrant, chapeau dans lequel est formé au moins un canal (53) de dérivation, qui, lorsque l'élément (3) filtré est inséré, met l'entrée (35) du filtre de la partie (9) de couvercle du corps (7) de filtre en communication avec le côté d'entrée de la vanne (V2) de dérivation.

11. Dispositif de filtration suivant la revendication 10,
**caractérisé en ce qu'**il est prévu, comme vanne de dérivation, une vanne à tiroir, soumise à l'action d'un ressort, dont le tiroir (55) est guidé dans un corps (41) de vanne de type en cylindre creux, concentrique à l'axe (25) longitudinal et qui forme, à l'ouverture provoquée par une pression accumulée, la communication fluidique entre un canal (53) de dérivation et l'intérieur du corps (41) de vanne.

12. Dispositif de filtration suivant la revendication 11,
**caractérisé en ce que** le tube (43) intérieur de l'élément (3) filtrant est prévu comme tube de dérivation, qui forme du côté intérieur au moins une partie de la communication fluidique entre l'intérieur du corps (41) de la vanne (V2) de dérivation et le raccord (T) de cuve mis dans la zone (17) de fond.

13. Dispositif de filtration suivant la revendication 12,
**caractérisé en ce que** le tube (43) intérieur de l'élément (3) filtrant est fermé et **en ce que** le corps (41) de vanne a une zone (65,67) de sortie qui, lorsque la vanne (V2) de dérivation est ouverte, forme la communication fluidique allant de l'intérieur du corps (41) de vanne à la sortie (33) du filtre dans la partie (9) de couvercle.

14. Dispositif de filtration suivant la revendication 13,
**caractérisé en ce que** la zone de sortie est formée par des ouvertures (67) dans un couvercle (65) de corps de vanne, qui forme, comme bouchon rond du côté de la tête, l'appui du ressort (59) de fermeture de la vanne (V2) de dérivation.

15. Dispositif de filtration suivant la revendication 14,
**caractérisé en ce que** les ouvertures (67) sont formées suivant un agencement réparti en forme d'étoile et en ayant une surface d'ouverture trapézoïdale dans le couvercle (65) du corps vanne.

16. Dispositif de filtration suivant l'une des revendications 10 à 15,
**caractérisé en ce que**, dans le conduit (51) pour du fluide concerné de la partie (9) de couvercle, est intégré un tamis (5) de protection de dérivation ou un filtre de dérivation monté dans le canal (53) de dérivation respectif.

17. Dispositif de filtration suivant l'une des revendications 7 à 16,
**caractérisé en ce qu'**il est prévu un support (93), formant un châssis au fond (85) du pot du boîtier (75) de ressorts, et un prolongement du corps (73) tubulaire, pour un agencement (97) de tamis de post-aspiration ou pour un filtre de post-aspiration, qui est inséré dans le trajet de fluide entre les ouvertures (87) de post-aspiration de la vanne (V3) de post-aspiration et le raccord (T) de cuve.
